# EUROPÄISCHE PATENTSCHRIFT

(11) **EP 0 595 109 B1**
(45) Veröffentlichungstag und Bekanntmachung des Hinweises auf die Patenterteilung: **16.07.1997**
(21) Anmeldenummer: 93116520.3
(22) Anmeldetag: 13.10.1993
(51) Int. Cl.: C22C 38/24, F16B 31/06

(54) **Bolzen zum Verbinden eines Startgerätes für Flugkörper mit dem Pylon eines Trägerflugzeuges**
Bolt for connecting a missile launcher to the pylon of a missile carrier
Boulon pour attacher un lanceur de missiles au pylône d'un avion porteur

(30) Priorität: 29.10.1992 DE 9214662 U
(43) Veröffentlichungstag der Anmeldung: 04.05.1994
(73) Patentinhaber: Bodenseewerk Gerätetechnik GmbH, 88662 Überlingen (DE)
(72) Erfinder: Knapp, Klaus-Dieter, D-88641 Überlingen-Nussdorf (DE); Podschadly, Gerhard Fritz Georg, D-88641 Überlingen (DE)
(74) Vertreter: Weisse, Jürgen, Dipl.-Phys. Patentanwalt

(56) Entgegenhaltungen:
- GB-A- 2 169 313
- US-A- 3 590 409
- C.W. WEGST 'stahlschlüssel' 1989 , VERLAG STAHLSCHLüSSEL WEGST GMBH , MARBACH stoff nr. 1.2343 * Seite 401 *

## Beschreibung

Die Erfindung betrifft einen Bolzen zum Verbinden eines Startgerätes für Flugkörper mit dem Pylon eines Trägerflugzeuges, mit einem Kopf, der von einem scheibenförmigen Abschnitt größeren Durchmessers und einem daran anschließenden zylindrischen Abschnitt geringeren Durchmessers gebildet ist, und mit einem Schaft mit einem glatt zylindrischen Abschnitt und einem daran anschließenden Gewindeabschnitt.

Die kraft- und formschlüssige Verbindung des Startgerätes mit dem Pylon eines Trägerflugzeugs wird durch Bolzen hergestellt. Diese Bolzen müssen sämtliche Belastungen, die auf das Startgerät wirken, schadlos übertragen. Bei Bruch dieser Bolzen verliert das Flugzeug das komplette Startgerät einschließlich Flugkörper. Es werden daher für diese Zwecke hochfeste Sonderschrauben mit besonders hohen Anforderungen verwendet. Die Kombination von Werkstoff, konstruktiver Auslegung, Wärmebehandlung und Fertigungstechnik bestimmen dabei neben der statischen Festigkeit auch die Dauerfestigkeit der Bolzen.

Bekannte Bolzen, die für diese Zwecke eingesetzt werden, sind infolge der starken dynamischen Belastungen im Tragflug dauerbruchgefährdet. Die verwendeten Werkstoffe, die konstruktive Auslegung und die angewandte Fertigungstechnik vermindern die Dauerfestigkeit des Bolzens infolge innerer und äußerer Kerbwirkung erheblich. Schadensfälle infolge Dauerbruchs sind bekannt geworden.

Der Erfindung liegt die Aufgabe zugrunde, die Dauerfestigkeit von Bolzen der eingangs genannten Art zu erhöhen, indem die innere und äußere Kerbwirkung vermindert wird.

Erfindungsgemäß wird diese Aufgabe gelöst durch die Kombination der folgenden Merkmale:
(a) Der Bolzen besteht aus einem wärmebehandelten Stahl, der nach der Wärmebehandlung ein feinkörniges Vergütungsgefüge ohne Seigerungszonen besitzt.
(b) Die Oberfläche ist in einer eine Wasserstoffversprödung ausschließenden Weise behandelt.
(c) Die Krümmungsradien von Innenkanten sind größer als 0,6 mm
(d) Das Gewinde des Bolzens ist gerollt.

Die erfindungsgemäßen Maßnahmen zusammen führen zu einer erheblichen Steigerung der Dauerfestigkeit bei gleichzeitig hoher statischer Festigkeit. Die Gefahr des Dauerbruchs des Bolzens wird erheblich gemindert. Dies führt zu einer höheren Sicherheit für das Trägerflugzeug und seine Besatzung im Flugbetrieb und erhöht die mechanische Zuverlässigkeit des Startgerätes.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

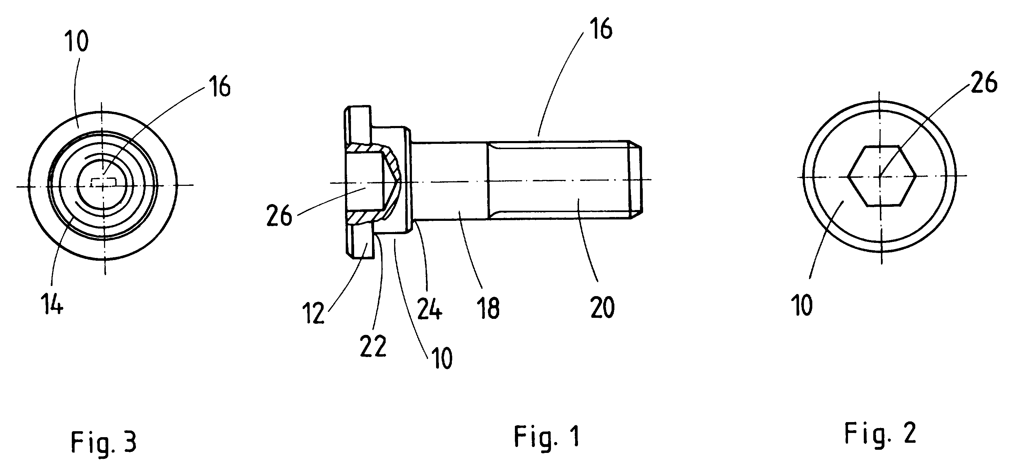

- Fig.1: zeigt eine Seitenansicht eines Bolzens, teilweise im Schnitt.
- Fig.2: zeigt eine Endansicht des Bolzens von links in Fig.1.
- Fig.3: zeigt eine Endansicht des Bolzens von rechts in Fig.1.

Der Bolzen zum Verbinden eines Startgerätes für Flugkörper mit dem Pylon eines Trägerflugzeuges weist einem Kopf 10 auf, der von einem scheibenförmigen Abschnitt 12 größeren Durchmessers und einem daran anschließenden zylindrischen Abschnitt 14 geringeren Durchmessers gebildet ist. Ein Schaft 16 des Bolzens besitzt anschließend an den zylindrischen Abschnitt 14 einen glatt zylindrischen Abschnitt 18 und einen daran anschließenden Gewindeabschnitt 20. Zwischen den Abschnitten 12 und 14 ist eine Innenkante 22 gebildet. Ebenso ist eine Innenkante 24 zwischen den Abschnitten 14 und 18 gebildet.

Der Bolzen besteht aus einem wärmebehandelten Stahl, der nach der Wärmebehandlung ein feinkörniges Vergütungsgefüge ohne Seigerungszonen besitzt. Das ist an dem fertigen Erzeugnis durch mikroskopische Untersuchung eines Schliffs feststellbar.

Die Oberfläche ist in einer eine Wasserstoffversprödung ausschließenden Weise behandelt. Auch diese Behandlung kann an dem fertigen Erzeugnis festgestellt werden.

Die Krümmungsradien von Innenkanten, z.B. 22 und 24 sind größer als 0,6 mm. Bei der dargestellten Ausführung ist der Krümmungsradius der Innenkante 22 zu 1,4 mm, der Krümmungsradius der Innenkante 24 zu 2,0 mm gewählt. Diese Krümmungsradien sollten mit einer Toleranz von 0,1 mm eingehalten werden.

Das Gewinde des Bolzens ist gerollt. Auch das läßt sich an einem Schliff unter dem Mikroskop am fertigen Erzeugnis feststellen.

Der Bolzen besteht aus höchstfestem Chrom-Molybdän-Vanadin-Stahl, nämlich aus einer Stahllegierung mit 0,4 C, 5 Cr, 1,3 Mo und 0,5 V. Der Bolzen ist vorzugsweise als Schmiedestück hergestellt. Der Schafteinstich des Bolzens, also der zylindrische Abschnitt 18 ist gerollt.

Der Kopf 10 des Bolzens weist einen gestauchten Innensechskant 26 auf.

Nach der mechanischen Bearbeitung ist der Bolzen mit einem anorganischen, metallischen Zinklammellenauftrag in einer Chromatverbindung beschichtet.

## Patentansprüche

1. Bolzen zum Verbinden eines Startgerätes für Flugkörper mit dem Pylon eines Trägerflugzeuges, mit einem Kopf (10), der von einem scheibenförmigen Abschnitt (12) größeren Durchmessers und einem daran anschließenden zylindrischen Abschnitt (14) geringeren Durchmessers gebildet ist, und mit einem Schaft (16) mit einem glatt zylindrischen Abschnitt (18) und einem daran anschließenden Gewindeabschnitt (20),
**gekennzeichnet durch die Kombination der nachstehenden Merkmale:**
(a) Der Bolzen besteht aus einem wärmebehandelten Stahl, der nach der Wärmebehandlung ein feinkörniges Vergütungsgefüge ohne Seigerungszonen besitzt.
(b) Die Oberfläche ist in einer eine Wasserstoffversprödung ausschließenden Weise behandelt.
(c) Die Krümmungsradien von Innenkanten sind größer als 0,6 mm
(d) Das Gewinde des Bolzens ist gerollt.

2. Bolzen nach Anspruch 1, **dadurch gekennzeichnet, daß** der Bolzen aus höchstfestem Chrom-Molybdän-Vanadin-Stahl besteht.

3. Bolzen nach Anspruch 2, dadurch gekennzeichnet, daß der Bolzen aus einer Stahllegierung mit 0,4 C, 5 Cr, 1,3 Mo und 0,5 V besteht.

4. Bolzen nach einem der Ansprüche 1 bis 3, **dadurch gekennzeichnet, daß** der Bolzen als Schmiedestück hergestellt ist.

5. Bolzen nach einem der Ansprüche 1 bis 4, **dadurch gekennzeichnet, daß** der Schafteinstich des Bolzens gerollt ist.

6. Bolzen nach einem der Ansprüche 1 bis 5, **dadurch gekennzeichnet, daß** der Kopf (10) des Bolzens einen gestauchten Innensechskant (26) aufweist.

7. Bolzen nach einem der Ansprüche 1 bis 6, **dadurch gekennzeichnet, daß** der Bolzen nach der mechanischen Bearbeitung mit einem anorganischen, metallischen Zinklammellenauftrag in einer Chromatverbindung beschichtet ist.

## Claims

1. Bolt for connecting a launcher for missiles with the pylon of a carrier aircraft with a head (10), which is formed by a disc-shaped section (12) with a larger diameter and an adjacend cylindrical section (14) with a smaller diameter, and a shaft (16) with a smooth cylindrical section (18) and an adjacend threaded section, **characterized** by the combination of the following characteristics:
(a) The bolt consists of a heat-treated steel, which has a fine-grained tempering-structure without segregation-zones.
(b) The surface is treated in a way, which excludes a hydrogen-embrittlement.
(c) The radii of curvature of the inner edges are larger than 0.6 mm.
(d) The thread of the bolt is roll-bent.

2. Bolt as claimed in claim 1, **characterized in that** the bolt consists of extremly firm chromium-molybdenum-vanadium-steel.

3. Bolt as claimed in claim 2, **characterized in that** the bolt consists of a steel alloy with 0.4 C, 5 Cr, 1.3 Mo and 0.5 V.

4. Bolt as claimed in anyone of the claims 1 to 3, **characterized in that** the bolt is manufactured as a forged piece.

5. Bolt as claimed in one of the claims 1 to 4, **characterized in that** the shaft recess of the bolt is roll-bent.

6. Bolt as claimed in one of the claims 1 to 5, **characterized in that** the head (10) of the bolt has a buckled hexagon socket (26).

7. Bolt as claimed in one of the claims 1 to 6, **characterized in that** after the mechanical treatment the bolt is coated with an inorganic, metallic zinc lamellar coating in a chromate-compound.

## Revendications

1. Cheville métallique destinée à relier un lanceur pour des missiles au pylône d'un avion pour porte-avions, munie d'une tête (10) formée d'une section en forme de disque (12) d'un diamètre d'une certaine grandeur et d'une section cylindrique (14) d'un diamètre plus petit adjacente à la première, et munie d'une tige (16) ayant une section cylindrique lisse (18) et une section filetée (20) adjacente à celle-ci,
**caractérisée par la combinaison des caractéristiques ci-après :**
(a) la cheville se compose d'un acier traité à la chaleur qui possède, après traitement thermique, une texture de traitement par trempe et revenu à grains fins sans zones de ségrégation.
(b) La surface est traitée d'une manière excluant une fragilisation due à l'hydrogène.
(c) Les rayons de courbure de surfaces intérieures sont supérieurs à 0,6 mm.
(d) Le filetage de la cheville métallique est roulé.

2. Cheville métallique selon la revendication 1, **caractérisée par le fait que** la cheville se compose d'acier au chrome-molybdène-vanadium extrêmement solide.

3. Cheville métallique selon la revendication 2, **caractérisée par le fait que** la cheville métallique se compose d'un alliage d'acier de 0,4 C, 5 Cr, 1,3 Mo et 0,5 V.

4. Cheville métallique selon l'une des revendications 1 à 3, **caractérisée par le fait que** la cheville métallique est fabriquée en tant que pièce en acier forgée.

5. Cheville métallique selon l'une des revendications 1 à 4, **caractérisée par le fait que** la partie à insérer de la tige de la cheville métallique est roulée.

6. Cheville métallique selon l'une des revendications 1 à 5, **caractérisée par le fait que** la tête (10) de la cheville métallique présente un six pans creux (26) comprimé.

7. Cheville métallique selon l'une des revendications 1 à 6, **caractérisée par le fait que** la cheville métallique est enduite, après traitement mécanique, d'une couche métallique anorganique de lamelles de zinc en une combinaison de chromate.
